Europäisches Patentamt

European Patent Office

Office européen des brevets

(11) Publication number : **0 510 984 A1**

## (12) EUROPEAN PATENT APPLICATION

(21) Application number : **92303675.0**

(22) Date of filing : **23.04.92**

(51) Int. Cl.⁵ : **H02K 5/167,** H02K 9/22, F16C 37/00

(30) Priority : **23.04.91 JP 58664/91**

(43) Date of publication of application :
**28.10.92 Bulletin 92/44**

(84) Designated Contracting States :
**DE FR GB IT**

(71) Applicant : **MABUCHI MOTOR KABUSHIKI KAISHA**
**No. 430, Matsuhidai**
**Matsudo-shi, Chiba-ken (JP)**

(72) Inventor : **Uzawa, Motohisa**
**Mabuchi Motor Kabushiki Kaisha, No. 430 Matsuhidai**
**Matsudo-shi, Chiba-ken (JP)**

(74) Representative : **Hitchcock, Esmond Antony**
**Lloyd Wise, Tregear & Co. Norman House**
**105-109 Strand**
**London WC2R 0AE (GB)**

(54) **Miniature electric motor.**

(57)  A miniature motor for automotive electrical equipment and power tools, has an end cap (3) comprising an outer frame (13) made of a resin, and a bearing holder (6) made of a metallic material, the combination providing heat resistance and low noise levels in use.

## FIG. I

The invention relates to miniature motors, and more particularly end caps for miniature motors of the type used in automotive electrical equipment and power tools. Such end caps support bearing holders for the shaft of the respective motor.

End caps for miniature motors which consist essentially of an electrically insulating material such as a resin, suffer from their inability to dissipate the heat generated by friction in the bearing supported thereon. On the other hand, end caps consisting essentially of metal plates generate vibrations and noise. In each case, the useful life of these known end caps can be restricted by these drawbacks.

According to the present invention, an end cap for a miniature electric motor comprises a frame formed of insulating material, and a bearing holder formed of metallic material incorporated in the frame. The bearing holder preferably has a flange and claws for securement to the frame. Such claws can be conveniently passed through holes in the frame, from either the inner or the outer side, and bent to secure the holder in place.

The invention also extends to miniature motors fitted with end caps as defined above. In use, the end caps provide good heat resistance and low noise levels. By reducing temperature rises and noise levels, the useful life of the bearing, and the motor, can be prolonged. These benefits however do not substantially alter the simple basic construction of the motor which remains easy to assemble.

The invention will now be described by way of example and with reference to the accompanying drawings wherein:

Figure 1 is a broken cross-sectional view of a miniature motor according to one embodiment of the invention;

Figure 2 is an exploded diagram illustrating the end cap of the motor shown in Figure 1;

Figure 3 is a broken cross-sectional view of a miniature motor according to another embodiment of the invention;

Figure 4 is an exploded diagram illustrating the end cap of the motor shown in Figure 3; and

Figures 5 and 6 are broken cross-sectional views of two known miniature motors.

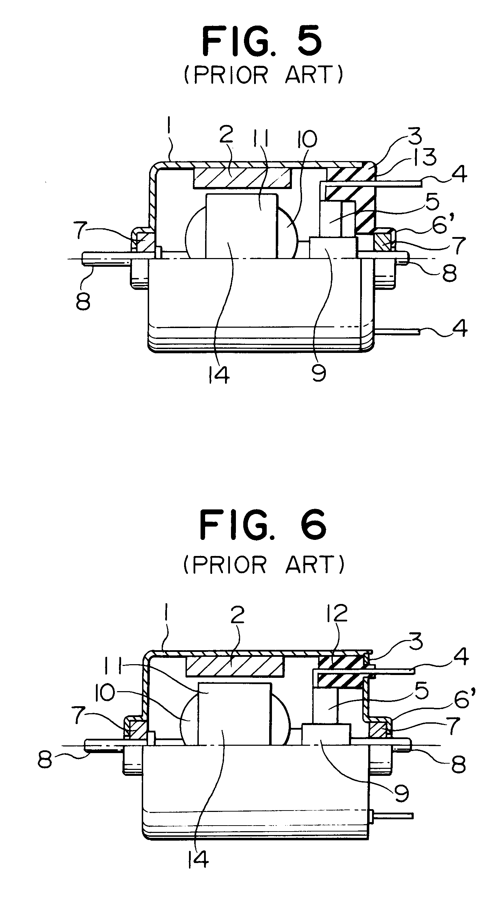

Two known miniature motors constructions will first be described with reference to Figures 5 and 6. Each motor comprises a case 1 of metallic material, an end cap 3 and a rotor 14. The case 1 holds a field magnet 2 and a bearing 7. The end cap 3 holds input terminals 4 and a bearing 7. The rotor 14 comprises an armature coil 10, a core 11, a commutator 9 and a shaft 8.

In the motor shown in Figure 5, the end cap 3 is made of an electrically insulating material, such as a resin. A bearing holder 6 is formed integrally with the end cap 3, in the same material. In the motor shown in Figure 6, the end cap 3 is made of a metallic material, as is the case 1. The bearing holder 6 is also made of a metallic material. Terminal holders 12 are made of an electrically insulating material.

Miniature motors of the type shown in Figures 5 and 6 provoke a number of problems. In the motor of Figure 5 the end cap 3 has to be made of an expensive heat-resistant resin to prevent the bearing holder 6, which is made integrally with the end cap 3, from being deformed by the heat caused by friction between the shaft 8 and the bearing 7. The motor of Figure 6, on the other hand, is good in heat dissipation and heat resistance because the end cap 3 is metallic. However, the end cap which essentially comprises a metallic sheet is less effective in absorbing vibrations, and the vibration generated in the end cap 3 tends to be transmitted to the case 1. Further, the noise generated in the miniature motor shown in Figure 6 is likely to be greater because of resonance and other phenomena.

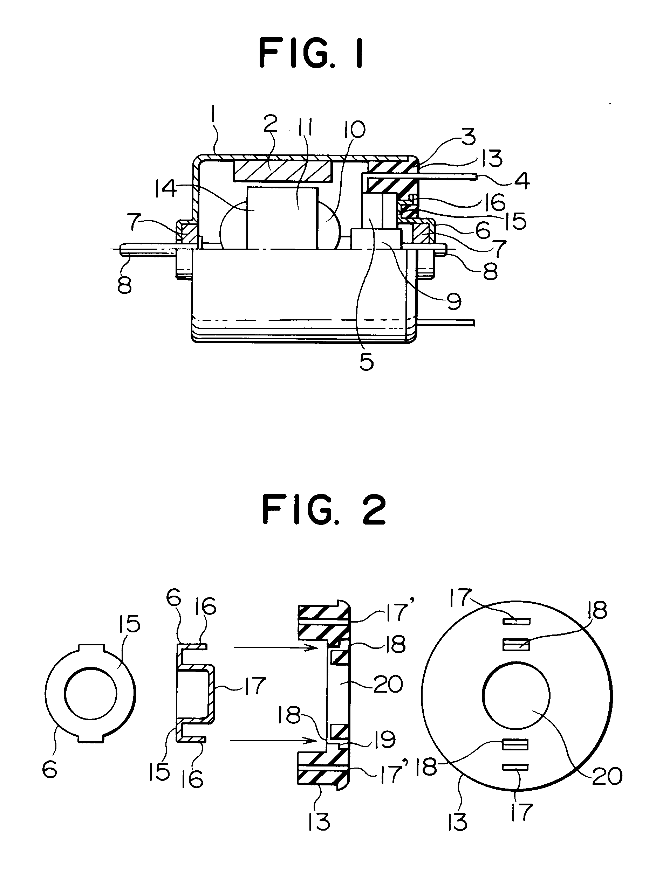

The embodiment of the invention shown in Figures 1 and 2 has an end cap 3 of such a construction that a bearing holder 6 made of a metallic material for holding a bearing 7 is incorporated in an outer frame 13 made of an electrically insulating material. In this embodiment, a flange 15 of the bearing holder 6 is formed inside the end cap 3.

The case 1 is made of a metallic material, such as mild steel, and formed into a hollow cylinder with a closed end. A field magnet (permanent magnet) 2 of an arc-segment shape is fixedly fitted to the inner circumferential surface of the case 1. Inside the case 1 is a rotor 14 comprising an armature coil 10 facing the field magnet 2, a core 11 and a commutator 9. The end cap 3 is fitted to the open end of the case 1. Brushes 5 are provided so as to make sliding contact with the commutator 9 and are electrically connected to input terminals 4. The input terminals 4 are fitted to the outer frame 13 in such a manner as to protrude towards the outside of the case cap 3. A bearing 7 is provided in a bearing holder 6 to support a shaft 8 integral with the rotor 14.

With the above construction, current is fed from the input terminals 4 to the armature via the brushes 5 and the commutator, to drive the motor in known manner.

The end cap 3 consists of the outer frame 13 and the bearing holder 6. The outer frame 13 forms the outer periphery of the end cap 3 and has such a diameter as to fit into the case 1. The outer frame 13, which is made of a resin, absorbs vibration. As this resin is not used to directly hold the bearing 7, it need not be an expensive heat-resistant resin.

The bearing holder 6 forms the inside of the end cap 3 and fixedly fitted to the outer frame 13. For this reason, the bearing holder 6 has a flange 15 and claws 16. The bearing holder 6 is made of a metallic material and has good heat dissipation and heat resistance. Because of the excellent heat dissipation of the bearing holder 6, temperature rise in the miniature motor can be kept to a low level.

Figure 2 shows the details of the end cap 3, particularly the plan view and the cross section of the outer frame 13 and the bearing holder 6. The outer frame 13 has a circular planar shape with a hole 20 at the centre thereof. The hole 20 is used for incorporating the bearing holder 6 (particularly the holder portion 17 thereof). The outer frame 13 has two, or a plurality of holes 17' for receiving the input terminals 4, and two, or a plurality of holes 18 for receiving two or more claws 16 of the bearing holder 6. In or adjacent the holes 18 are engaging portions 19, which form a shoulder by making the radial width of the holes 18 narrower on the inside of the motor and wider on the outside of the motor.

The bearing holder 6 consists of a portion 17 for holding the bearing 7, a flange 15 formed with a predetermined width on the outer periphery of the holder portion 17, and two claws 16 provided at predetermined locations on the outer periphery of the flange 15. The holder portion 17 is formed into a closed hollow cylinder and holds the bearing 7 by making close contact with the bearing 7 in such a manner as to embrace the bearing 7.

The end cap 3 is assembled in the following manner. The claws 16 of the bearing holder 6 are inserted into the holes 18 of the outer frame 13. At the same time, the holder portion 17 is fitted into the hold 20. The flange 15 is forced onto the corresponding surface of the outer frame 13. The tips of the claws 16 are then bent along the engaging portion 19 in the state where the flange 15 is forced onto the corresponding surface of the outer frame 13. As the bent tips of the claws 16 stake the outer frame 13, the bearing holder 6 is secured to the outer frame 13. This assembled state is shown in Figure 1. The end cap 3 has such a relatively simple construct.ion that it can be easily assembled.

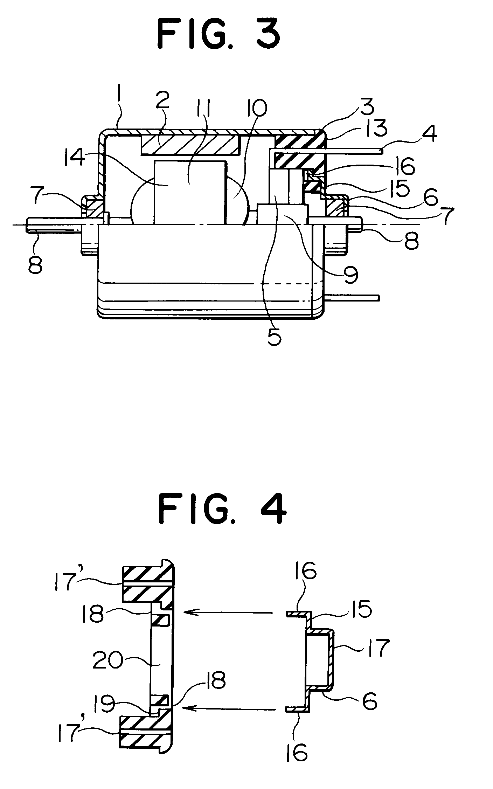

Another embodiment of the invention in shown in Figures 3 and 4. In this embodiment, the flange 15 of the bearing holder 6 is provided on the outside of the case cap 3. With this construction, a large area of the bearing holder 6 made of a metallic material is exposed on the outside of the motor, and the heat-dissipating performance of the bearing holder 6 is thereby improved.

In this embodiment, the bearing holder 6 is assembled into the outer frame 13 from the outside of the motor, as shown in Figure 4, and the claws 16 are disposed on the inside of the motor, in contrast to the arrangement shown in Figure 2. Either mode of assembly can be selected, depending on the type of assembly line.

As described above, this invention makes it possible to transmit the heat generated by friction between the shaft and the bearing to the metallic bearing holder via the metallic bearing, and dissipated from the bearing holder to the outside. The vibration caused by the bearing is damped by the outer frame made of a resin, with a small amount of vibration transmitted to the case. This leads to reduced motor noise. In other words, the heat generated by the friction between the shaft 8 and the bearing 7 as the rotor 14 rotates, the heat caused by the friction between the commutator 9 and the brushes 5, and the heat produced by electrical sparks can be efficiently dissipated by the bearing holder 6. This inhibits deformation of the motor components by heat, and can extend the service life of the miniature motor. The vibration transmitted from the bearing 7 to the bearing holder 6 is damped by the outer frame 13 made of a resin. This reduces the amount of vibration transmitted to the case 1, leading to reduced motor noise. Consequently, the temperature rise and noise levels in the miniature motor can be reduced to a relatively low level, and the end cap is substantially prevented from being deformed.

## Claims

1. An end cap for fitting to the case of a miniature motor, and for supporting a bearing for the motor rotor, which end cap comprises a frame (13) formed of insulating material, and a bearing holder (6) formed of metallic material incorporated in the frame.

2. An end cap according to Claim 1 wherein the insulating material of the frame is resin.

3. An end cap according to Claim 1 or Claim 2 wherein the bearing holder has a flange (15) and claws (16) forsecurement to the frame.

4. An end cap according to Claim 3 wherein the claws (16) extend through holes (18) in the outer frame (13), and the tips of the claws are bent along engaging portions provided adjacent the holes (18) to secure the bearing holder (6) on the frame.

5. An end cap according to Claim 4 wherein the engaging portions are provided on the outer side of the frame (13), the bearing holder (6) being mounted from the inside thereof.

6. An end cap according to Claim 4 wherein the engaging portion are provided on the inner side of the frame (13), the bearing holder (6) being mounted from the outside thereof.

7. A miniature motor comprising a case (1) supporting a field magnet (2), a rotor (14), and an end cap according to any preceding Claim supporting a bearing (7) for the rotor (14).

# FIG. I

# FIG. 2

# FIG. 3

# FIG. 4

# FIG. 5
## (PRIOR ART)

# FIG. 6
## (PRIOR ART)

European Patent
Office

**EUROPEAN SEARCH REPORT**

Application Number

EP    92 30 3675

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 052 970 (BLACK & DECKER)<br>* page 5, line 11 - page 11, line 5; figures 1-18 * | 1,2,7 | H02K5/167<br>H02K9/22<br>F16C37/00 |
| Y | | 3-6 | |
| Y | DE-A-1 563 027 (SIEMENS)<br>* page 6, line 1 - line 13; figures 3,4 * | 3-6 | |
| X | US-A-3 824 684 (WHEELER)<br>* column 2, line 42 - column 3, line 60; figures 1-5 * | 1,2,7 | |
| A | | 5 | |
| X | GB-A-2 062 365 (MABUCHI MOTOR)<br>* page 1, line 126 - page 2, line 116; figures 3-8 * | 1,2,7 | |
| A | | 5,6 | |
| X | GB-A-2 154 073 (BLACK & DECKER)<br>* page 2, line 88 - line 101 *<br>* page 3, line 7 - line 15; figures 1-5 * | 1,2,7 | TECHNICAL FIELDS SEARCHED (Int. Cl.5) |
| X | PATENT ABSTRACTS OF JAPAN<br>vol. 7, no. 94 (E-171)(1239) 20 April 1983<br>& JP-A-58 019 140 ( MATSUSHITA ) 4 February 1983<br>* abstract * | 1,2,7 | H02K<br>F16C |

The present search report has been drawn up for all claims

| Place of search | Date of completion of the search | Examiner |
|---|---|---|
| THE HAGUE | 24 JULY 1992 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)